(19) **Europäisches Patentamt European Patent Office Office européen des brevets**

(11) **EP 4 648 616 B1**

(12) **EUROPEAN PATENT SPECIFICATION**

(45) Date of publication and mention
of the grant of the patent:
**01.07.2026 Bulletin 2026/27**

(21) Application number: **24700108.4**

(22) Date of filing: **10.01.2024**

(51) International Patent Classification (IPC):
*A21D 2/16* (2006.01)    *A21D 10/04* (2006.01)
*A21D 13/80* (2017.01)   *A21D 13/16* (2017.01)
*A21D 10/00* (2006.01)   *A21D 8/04* (2006.01)
*A21D 13/31* (2017.01)   *A21D 13/60* (2017.01)
*A23P 30/20* (2016.01)

(52) Cooperative Patent Classification (CPC):
**A21D 13/60; A21D 2/16; A21D 8/042; A21D 13/31; A23P 30/20**

(86) International application number:
**PCT/EP2024/050469**

(87) International publication number:
**WO 2024/149796 (18.07.2024 Gazette 2024/29)**

(54) **IMPROVED BATTER STRAND BASED PRODUCTS**

VERBESSERTE TEIGSTRANGPRODUKTE

PRODUITS AMÉLIORÉS À BASE DE BANDES DE PÂTE À FRIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Validation States:
**MA MD**

(30) Priority: **10.01.2023 BE 202305010**

(43) Date of publication of application:
**19.11.2025 Bulletin 2025/47**

(73) Proprietors:
• **Puratos NV**
  **1702 Groot-Bijgaarden (BE)**
• **Banopuratos Factory Fze**
  **Sharjah (AE)**

(72) Inventors:
• **KAWWA, Achraf**
  **DUBAI (AE)**
• **DE RUYTER, Kevin**
  **8210 Loppem (BE)**

(74) Representative: **De Clercq & Partners**
  **Edgard Gevaertdreef 10a**
  **9830 Sint-Martens-Latem (BE)**

(56) References cited:
**WO-A1-2018/011117    WO-A1-2018/011118
WO-A2-02/065854**

• **DATABASE GNPD [online] MINTEL; 30 April 2018 (2018-04-30), ANONYMOUS: "Lebanese Assorted Sweets", XP093055555, retrieved from https://www.gnpd.com/sinatra/recordpage/ 5625841/ Database accession no. 5625841**
• **DATABASE GNPD [online] MINTEL; 30 April 2018 (2018-04-30), ANONYMOUS: "Lebanese Assorted Sweets", XP093055555, retrieved from https://www.gnpd.com/sinatra/recordpage/ 5625841/ Database accession no. 5625841**

## Description

### FIELD OF THE INVENTION

The invention relates to the improvement of the product characteristics and eating qualities of batter strand based products, such as Arabic Sweets, made from flour as a base of the batter.

### BACKGROUND OF THE INVENTION

Borma (sometimes alternatively termed Burma) is one of the most popular Arabic sweets. Borma is made of thin strands or threads of batter that are sprinkled on a rotating hot plate and baked for a few seconds. The baked threads are then cooled, lined up, rolled around a filing traditionally made of pistachio, deep fried and finally soaked in a sugar syrup. Depending on the format and the region, Borma may also be known with alternative naming such as Faysaliya or Mabrouma.

Borma batters need a good extensibility in order to be processed in a soft delicious product. In addition, Borma products are commonly stored for a prolonged time and need to keep their taste and texture during the full shelf-life of the product.

An important problem in the production of batter strand based products, such as Borma, is that the thin batter strands often break after leaving the nozzle of the sprinkler. To avoid this, the producers typically prepare a thicker batter thread in order to be able to process it. However, thickening the batter strand thread results in a product with a higher fat absorption during the deep-frying step and higher sugar syrup absorption during the soaking step. The resulting Borma sweets made with thicker batter strands are often soggy and cannot drain well. In addition, the eating quality deteriorates over the shelf life and higher chances of fat rancidity are observed.

Therefore, there is a need to provide improved compositions and processes to ensure obtaining Arabic sweets and other batter strand based products with superior visual, eating and storage qualities.

WO 2018/011118 A1 discloses a combination of a thermophilic serine protease and monoglycerides, which is able to improve the short bite in bakery products.

### SUMMARY OF THE INVENTION

The inventors have developed improved compositions and methods for the preparation of batter strands and batter strand based baked products that overcome the limitations and disadvantages of the known compositions and methods. The inventors have surprisingly found that the simultaneous use of a sufficient amount of a specific type of monoglycerides and a sufficient dosage of specific enzymes when preparing the batter strand before extrusion and subsequent baking/frying shows an unexpected positive/synergistic effect on the properties of the batter strands and of the batter strand based baked products, such as Arabic sweets, made with them. More particularly, the methods and compositions of the present invention allow to obtain thin batter strands, in particular thin baked batter strands, which do not break during extrusion, resulting in a high quality batter strand based product, particularly a high quality Borma type product, with uniform shape and colour, and uniform and smooth strand lining. In addition, the Borma pastry exhibited reduced oil and sugar absorption during the oil frying and sugar soaking step, respectively.

A first aspect of the present invention provides a method to obtain baked batter strands, wherein the method comprises the steps of:

(a) preparing a batter comprising

- flour, water,
- one or more monoglycerides, preferably wherein the one or more monoglycerides have an iodine value lower or equal to 5.0, and, when the one or more monoglycerides are in powder form, wherein at least 70.0% of said monoglycerides have a particle size lower than 200 $\mu$m, preferably lower than 150 $\mu$m,
- at least one protease enzyme, preferably wherein the at least one protease enzyme is a thermophilic serine protease,
- at least one lipase enzyme, preferably wherein the at least one lipase enzyme is a phospholipase, more preferably is a phospholipase A, even more preferably is a phospholipase A1,
- optionally starch and/or oil,
- optionally sugar and/or sugar syrup,
- optionally eggs and/or milk powder, and,
- optionally one or more reducing agents;

(b) optionally resting the batter,

(c) extruding or processing the batter into individual batter strands, particularly wherein the individual batter strands have a diameter between 0.4 mm and 3.0 mm, preferably between 0.5 and 2.0 mm, and

(d) baking the batter strands, thereby obtaining the baked batter strands, particularly wherein the baked batter strands have a mean diameter between 0.4 mm and 3.0 mm, preferably between 0.5 and 2.0 mm.

In particular embodiments, the one or more monoglycerides are present in the batter in an amount between 100 and 2000 g/100 kg flour; and/or the at least one protease enzyme is present in the batter in an amount between 30 and 1000 protease units/100 kg flour; and/or the at least one lipase enzyme is present in the batter in an amount between 2300 and 60000 phospholipase units/100 kg flour.

In particular embodiments, the batter strands after extruding and/or baking have a length of at least 30 cm or 50 cm.

In a particular embodiment of the method according to the present invention, the method comprises the steps of

(a) preparing a batter, wherein the batter comprises expressed on flour weight:

-   100 wt% flour, preferably flour having a P/L ratio between 0.5 and 3, even more preferably flour having a P/L ratio between 0.5 and 2;
-   100-250 wt% water;
-   one or more monoglycerides, preferably wherein said monoglycerides are saturated monoglycerides in powder form, having an iodine value lower or equal to 5.0, and wherein at least 70.0% of the monoglycerides in powder form have a particle size between 50 and 200 $\mu$m, in an amount between 100 and 2000 g/100 kg flour;
-   at least one protease enzyme, preferably wherein the at least one protease enzyme is a thermophilic serine protease, in an amount between 30 and 1000 protease units/100 kg flour;
-   at least one lipase enzyme, preferably wherein the at least one lipase enzyme is a phospholipase, in an amount between 2300 and 60000 phospholipase units/100 kg flour; and;
-   optionally 0-15 wt% oil, particularly 5-15 wt% oil;
-   optionally 5-60 wt% starch, particularly 25-50 wt% starch, particularly native starch;
-   optionally 0-10 wt% eggs and/or milk powder, particularly 4-10 wt% eggs and/or milk powder;
-   optionally 0-15 wt% sugar and/or sugar syrup, particularly 5-15 wt% sugar and/or sugar syrup; and
-   optionally a reducing agent, wherein when said reducing agent is sodium metabisulphite, it is present in an amount between 5.0 and 20.0 g / 100 kg of flour, or when said reducing agent is deactivated yeast, it is present in an amount between 500 and 3000 g / 100 kg of flour;

(b) optionally resting the batter between 0 min and 16 hours, and

(c) extruding or processing the batter into individual batter strands with diameter between 0.4 and 3.0 mm, preferably between 0.5 and 2.0 mm, and preferably having a length of at least 30 cm or 50 cm, and

(d) baking the batter strands, preferably for a period between 10 and 60 s at a temperature between 180 and 220 °C, thereby obtaining the baked batter strands of diameter between 0.4 and 3.0 mm, preferably between 0.5 and 2.0 mm.

A further related aspect of the present invention provides a method to obtain a baked batter strand based product, particularly an Arabic sweet, such as a Borma type product, comprising the steps of:

(i) preparing baked batter strands according to a method of the present invention;

(ii) rolling a plurality of the baked batter strands around a filling, thereby obtaining a rolled and filled product, particularly wherein the filling is a nut-based filling, particularly comprising pistachio, peanut, cashew nut, walnut, almond, and the like;

(iii) soaking the rolled and filled product in fat or oil;

(iv) frying the rolled and filled product in the fat or oil, preferably between 20 and 60 minutes at a temperature between 150°C and 200°C;

(v) cooling the fried products;

(vi) soaking the fried products in sugar syrup, thereby obtaining a baked batter strand based product; and

(vii) optionally, cutting and packaging the baked batter strand based products.

More in particular, the baked batter strand based product, preferably the borma-type product, has absorbed at least 5% less oil or fat and at least 5% less sugar during the preparation of the product, particularly during the step of frying in fat or oil and during the soaking in sugar syrup, respectively, compared to a baked batter strand based product prepared without the one or more monoglycerides, the at least one protease enzyme and the at least one lipase enzyme.

A further related aspect of the present invention provides a baked batter strand, particularly having a diameter between 0.4 and 3.0 mm, more particularly between 0.5 and 2.0 mm, obtained by a method according to the present invention. In particular, the baked batter strand comprises flour; water; one or more monoglycerides, preferably wherein the one or more monoglycerides have an iodine value lower or equal to 5.0, and, when the one or more monoglycerides are in powder form, wherein at least 70.0% of said monoglycerides have a particle size lower than 200 μm, preferably lower than 150 μm, particularly in an amount between 100 and 2000 g/100 kg flour; at least one protease enzyme, preferably wherein the at least one protease enzyme is a thermophilic serine protease, particularly in an amount between 30 and 1000 protease units/100 kg flour; at least one lipase enzyme, preferably wherein the at least one lipase enzyme is a phospholipase, more preferably is a phospholipase A, even more preferably is a phospholipase A1, particularly in an amount between 2300 and 60000 phospholipase units/100 kg flour; optionally starch and/or oil; optionally sugar and/or sugar syrup; optionally eggs and/or milk powder; and, optionally one or more reducing agents.

A further related aspect of the present invention provides an improver composition, preferably a powdered composition, comprising:

- one or more monoglycerides, preferably wherein said monoglycerides are saturated monoglycerides in powder form, having an iodine value lower or equal to 5, and wherein at least 70% of the monoglycerides in powder form have a particle size between 50 and 200 μm;
- at least one protease enzyme, preferably wherein said protease enzyme is a thermophilic serine protease;
- at least one lipase enzyme, preferably wherein said lipase enzyme is a phospholipase;

wherein the protease enzyme is present in the improver composition in an amount between 0.01 and 10 protease units per g of said one or more monoglycerides; and
wherein the lipase enzyme is present in the improver composition in an amount between 1 and 600 phospholipase units per g of said one or more monoglycerides.

Yet another further related aspect of the present invention provides the use of the baked batter strand according to the present invention or the use of the improver composition according to the present invention, for the preparation of baked batter strand based products, particularly for the preparation of baked batter strand based products with reduced absorption of oil or fat and sugar during the preparation of the product, compared to a baked batter strand based product prepared without the one or more monoglycerides, the at least one protease enzyme and the at least one lipase enzyme.

## DESCRIPTION

Before the present method, compositions and devices used in the invention are described, it is to be understood that this invention is not limited to particular methods, compositions, components, or devices described, as such methods, compositions, components, and devices may, of course, vary. It is also to be understood that the terminology used herein is not intended to be limiting, since the scope of the present invention will be limited only by the appended claims.

Unless defined otherwise, all technical and scientific terms used herein have the same meaning as commonly understood by one of ordinary skill in the art to which this invention belongs. Although any method and material similar or equivalent to those described herein may be used in practice or testing of the present invention, the preferred methods and materials are now described.

In this specification and the appended claims, the singular forms "a", "an", "the" include both the singular and the plural, unless the context clearly indicates otherwise.

The terms "comprising", "comprises" and "comprised of" as used herein are synonymous with "including", "includes" or "containing", "contains", and are inclusive or open-ended and do not exclude additional, non-recited members, elements or method steps. Where this description refers to a product or process which "comprises" specific features, parts or steps, this refers to the possibility that other features, parts or steps may also be present, but may also refer to embodiments which only contain the listed features, parts or steps. The terms "comprising", "comprises" and "comprised of" also include the term "consisting of".

The enumeration of numeric values by means of ranges of figures comprises all values and fractions in these ranges, as well as the cited end points.

The terms "about" and "approximately" as used when referring to a measurable value, such as a parameter, an amount, a time period, and the like, is intended to include variations of +/-10% or less, preferably +/-5% or less, more preferably +/-1% or less, and still more preferably +/-0.1% or less, of and from the specified value, in so far as the variations apply to the invention disclosed herein. It should be understood that the value to which the term "about" or "approximately" refers per se has also been disclosed.

The inventors have surprisingly found that the simultaneous use of monoglycerides, particularly a specific type of monoglycerides, specific enzymes and, optionally, a reducing agent in a batter before extrusion shows an unexpected positive/synergistic effect on the properties of thin batter strands or threads and of the baked products, in particular Arabic sweets, made with them. More particularly, the methods and compositions of the present invention allow to obtain an improved batter with improved properties compared to a batter not comprising the particular combination of monoglycerides, protease, lipase and, optionally, a reducing agent. In particular, the batter comprising the particular combination of monoglycerides, protease, lipase and, optionally, a reducing agent, is more resistant to breakage during the extrusion step to obtain thin batter strands, thus allowing to obtain thinner batter strands than in absence of the combination envisaged herein, and subsequently to obtain superior baked batter strand based products, such as Borma type Arabic sweets.

In this context, the present invention generally provides methods to obtain a (baked) batter strand or to obtain a (baked) batter strand based baked product, comprising the addition of a combination of monoglycerides, protease(s), lipase(s), and, optionally, a reducing agent, to the batter. The present invention further generally provides improver compositions, baked batter strands comprising the combination of monoglycerides, protease(s) and lipase(s), and their use in the preparation of a baked batter strand based product.

In the context of the present invention, the terms "batter strand", "batter thread" or "thin/very thin batter strand / batter thread" are used interchangeably herein. A batter strand is a very thin batter thread, characterized by, as typically determined after baking, a mean diameter between 0.4 and 3.0 mm, preferably between 0.5 and 2.0 mm, more preferably between 0.5 and 1.5 mm. The diameter may be measured for example with a micrometre or by any suitable method known in the art. In addition, the batter strands have a length of at least 30 cm or at least 50 cm, such as ranging between 50 cm and 200 cm, or between 50 cm and 150 cm.

A batter is generally understood as a flour-based viscous liquid mixture comprising at least flour and water (or milk).

Accordingly, in a first aspect, the present invention relates to a method to obtain baked batter strands, wherein the method comprises the steps of:

(a) preparing a batter comprising

- flour, water,
- one or more monoglycerides,
- at least one protease enzyme,
- at least one lipase enzyme,
- optionally starch and/or oil,
- optionally sugar and/or sugar syrup,
- optionally eggs and/or milk powder, and,
- optionally one or more reducing agents;

(b) optionally resting the batter,
(c) extruding or processing the batter into individual batter strands, particularly wherein the individual batter strands have a diameter between 0.4 mm and 3.0 mm, preferably between 0.5 and 2.0 mm, and
(d) baking the batter strands, thereby obtaining the baked batter strands, particularly wherein the baked batter strands have a mean diameter between 0.4 mm and 3.0 mm, preferably between 0.5 and 2.0 mm.

In particular embodiments, the method comprises the steps of:

(a) preparing a batter comprising

- flour, water,
- one or more monoglycerides, wherein the one or more monoglycerides have an iodine value lower or equal to 5.0, wherein the one or more monoglycerides are in powder form, and wherein at least 70.0% of said monoglycerides have a particle size lower than 200 $\mu$m;
- at least one protease enzyme, wherein said protease enzyme is a thermophilic serine protease having an optimum activity at a temperature higher than 70.0°C;
- at least one lipase enzyme, wherein said lipase enzyme is a phospholipase;
- optionally starch and/or oil,
- optionally sugar and/or sugar syrup,
- optionally eggs and/or milk powder, and,
- optionally one or more reducing agents;

(b) optionally resting the batter,
(c) extruding or processing the batter into individual batter strands, particularly wherein the individual batter strands have a diameter between 0.4 mm and 3.0 mm, preferably between 0.5 and 2.0 mm, and

(d) baking the batter strands, thereby obtaining the baked batter strands, particularly wherein the baked batter strands have a mean diameter between 0.4 mm and 3.0 mm, preferably between 0.5 and 2.0 mm.

As used herein, the term "monoglycerides" refers generally to a class of glycerides which are composed of a molecule of glycerol linked to a fatty acid via an ester bond.

Monoglycerides are one of the many types of emulsifiers used in bakery applications: among these are monoglycerides (or mixtures of monoglycerides and diglycerides; referred as E471 by the International Numbering System for Food Additives (INS) or as 184.1505 by the US Food and Drug Agency), monoglycerides derivatives (as for example succinylated, lactylated or acetylated monoglycerides, diacetyl tartaric acid esters of monoglycerides (DATEM), glycerol monostearate (GMS), propylene glycol monoester, ...), sorbitan emulsifiers (sorbitan monostarate), polysorbates, sodium stearoyl lactylate (SSL), polyglycerol esters, sucrose esters and lecithin.

In the context of the present invention, the monoglycerides (E471) may be any type of monoglycerides. In a particular embodiment, the monoglycerides are added in powder form to the dough and, in this case, at least 70% of the monoglycerides have a particle size lower than 200 $\mu$m, such as between 50 $\mu$m and 200 $\mu$m, preferably lower than 160 $\mu$m, more preferably lower than 120 $\mu$m. In the context of the present invention the particle size is advantageously determined by laser diffraction method as described herein. Preferably, the monoglycerides are saturated or fully hydrogenated monoglycerides with an iodine value below 5, such as between 0 and 5, preferably below 2.5 or between 0 and 2.5, more preferably lower or equal to 2 or between 0 and 2. In the context of the present invention the iodine value is advantageously determined using an assay derived from the method of Wijs - Hoffmann - Green as described herein.

Monoglycerides are advantageously added to or present in the batter in a concentration between 100 and 2000 g / 100 kg of flour, preferably between 200 and 1500 g / 100 kg of flour, more preferably between 300 and 800 g / 100 kg of flour.

As used herein, the term "protease" refers generally to enzymes that hydrolyse the peptide bonds that link amino acids together in a polypeptide chain preferably as defined by enzyme classification entry EC 3.4, and are also referred to as peptidases or proteinases. They are classified in several classes according to their catalytic residues. Among these classes, serine proteases (or serine endopeptidases) are proteases that cleave peptide bonds in proteins, in which serine serves as the nucleophilic amino acid at the active site. Serine proteases are defined by enzyme entry EC 3.4.21. Serine proteases may be further sub classified according to their substrate specificity as trypsin-like, chymotrypsin-like, thrombin-like, elastase-like or subtilisin like. In the context of the present invention, the protease activity is measured using azurine crosslinked casein (AZCL-casein) as a substrate, particularly at pH 7.0 and 60°C. Hydrolysis by proteases produces water soluble dyed fragments, and the rate of release of these fragments, by measuring the increase in absorbance at 590 nm, can be related directly to enzyme activity (Protazyme AK Tablets, Megazyme, Ireland). In this context, the protease activity, expressed in units or protease units, is determined according to the formula:

$$\text{Protease activity in milliunits)/ml} = (34.2 * (\text{Abs}_{590} \text{ enzyme - Abs}_{590} \text{ blank}) + 0.6) \text{ / dilution.}$$

More details on the protease activity measurement are given in the examples.

The protease activity can also be measured with other assays for protease activity known by persons skilled in the art. Among these is the colorimetric method using casein as substrate followed by the detection of the released amino acids with the Folin & Ciocalteu's Phenol reagent.

In the context of the present invention, the protease is a thermophilic serine protease, more in particular a thermophilic serine protease having an optimum activity at a temperature higher than 70°C, preferably at a temperature higher than 75°C and more preferably at a temperature higher than 80°C.

Stated differently, the activity of the thermophilic serine protease obtains a maximum value at a temperature higher than 75°C and more preferably at a temperature higher than 80°C. More in particular, the protease is a thermophilic serine protease wherein the ratio between the protease activity at optimum temperature (i.e. the temperature corresponding to the maximum activity value) and the protease activity at 25°C is higher than 10, preferably higher than 15. By providing that said ratio is higher than 10, the thermophilic serine protease as used herein provides improved effects on the properties of the batter and batter based products, in particular Arabic sweets.

The protease may be obtained by extraction from naturally occurring eukaryotic or prokaryotic organisms, by synthesis or by genetic engineering. In a particular embodiment, the protease is a neutral or an alkaline thermophilic serine protease. While fungal proteases are sensitive to high temperatures, bacterial neutral and alkaline proteases are more resistant to higher heat treatments.

Examples of suitable proteases are Taq proteases or thermitase. In the context of the present invention, the protease is particularly a Taq protease, preferably isolated from *Thermus aquaticus,* preferably aqualysin I or aqualysin II, more preferably aqualysin I, and even more preferably aqualysin I isolated from *Thermus aquaticus* LMG8924.

In particular embodiments, the protease, particularly the thermophilic serine protease, is advantageously present in or added to the dough in an amount of 30 to 1000 protease units / 100 kg of flour, preferably at 50 to 600 protease units / 100 kg of flour, more preferably at 100 to 200 protease units / 100 kg of flour, the enzyme activity being obtained using the method described herein, particularly wherein the protease activity is measured on azurine crosslinked casein as substrate using the method described in example 1.

In the context of the present invention, the lipase is particularly a phospholipase, more preferably a phospholipase A, even more preferably a phospholipase A1.

As used herein, the term "phospholipase" refers generally to enzymes that hydrolyse phospholipids into fatty acids and other lipophilic substances like for example lysophospholipids, diacylglycerols, choline phosphate and phosphatidates, depending on the site of hydrolysis. Depending on the specific bond targeted in the phospholipid molecule, phospholipases are classified in different types such as A, B, C and D.

As used herein, the term "phospholipase A" refers to lipolytic enzymes that catalyse the hydrolysis of one or more bonds in phospholipids. Two different types of phospholipase A activity can be distinguished which hydrolyse the ester bond(s) that link the fatty acyl moieties to the glycerol backbone. Phospholipase A1, as defined by enzyme entry EC 3.1.1.32, and Phospholipase A2, as defined by enzyme entry EC 3.1.1.4, catalyse the deacylation of one fatty acyl group in the sn-1 and sn-2 positions respectively, from a diacylglycerophospholipid to produce lysophospholipid. Phospholipase activity may be assayed using different methods such as Phospholipase Activity Assay Kit (Colorimetric, Abcam), Secretory Phospholipase Activity Assay Kit (Fluorometric, Abcam), EnzChek® Phospholipase A1/A2 Assay Kit (Life Technologies). Preferably, the phospholipase activity may be measured using 1,2-Dioleoyl-sn-glycero-3-phospho-rac-1-glycerol (DOPG) as substrate. The release of free fatty acid due to hydrolysis of 1,2-Dioleoyl-sn-glycero-3-phospho-rac-1-glycerol by phospholipase is measured by spectrophotometry at 550nm, against a calibration curve established by using different concentrations of oleic acid. One phospholipase activity unit (NefU) is defined as the amount of enzyme needed to release 1 nmol of free fatty acid per minute at 30°C and pH7.5.

In a particular embodiments, the lipase, particularly the phospholipase is present in or added to the dough in an amount of 2300 to 60000 phospholipase units / 100 kg of flour, preferably at 5750 to 48000 phospholipase units / 100 kg of flour, more preferably at 11500 to 23000 phospholipase units / 100 kg of flour, the enzyme activity being obtained using the method described herein, particularly wherein the phospholipase activity is measured using 1,2-Dioleoyl-sn-glycero-3-phospho-rac-1-glycerol as substrate using the method as described in example 1.

In the context of the present invention, the flour may be any flour suitable for baking. Preferably the flour is wheat flour. More preferably the flour is a wheat flour that has a resistance extensibility ratio (P/L) between 0.5 and 3, even more preferably is a wheat flour that has a resistance extensibility (P/L) ratio between 0.5 and 2. A P/L ratio below 1 is particularly preferred. The P/L ratio of a particular flour may be adjusted to a value below 1 by the addition of a reducing agent, as further discussed herein. The P/L is advantageously measured by an alveograph test, in particular an alveograph test according to AACC International Method 54-30.1999 or ICC Standard No. 121.1992. In such a test the P value is the maximum pressure required for the deformation of a dough sample or overpressure. The P-value is graphically seen as the height of the peak and is related to the resistance of the dough to deformation (tenacity). The L value reflects the maximum amount of air the bubble in the sample dough is able to contain. L-value is graphically seen as the length of the alveograph curve or distance at which the bubble ruptures, an indication of dough extensibility.

In the context of the present invention, the batter may be prepared with or contain one or more optional ingredients, such as oil and/or starch, sugar and/or sugar syrup, eggs and/or milk powder, and/or a reducing agent.

In the context of the present invention the oil may be any type of vegetable oil. Preferably the oil is chosen from sunflower oil, canola oil, rapeseed oil or olive oil. More preferably the oil is sunflower oil.

In the context of the present invention the starch may be any type of starch. Preferably, the starch is native starch, starch that has not been enzymatically, physically or chemically treated.

Preferably, the starch is wheat starch or corn starch. More preferably the starch is native corn starch

In the context of the present invention, the reducing agent is an ingredient that reduces the number of cross-links between the gluten subunits in a dough or batter during mixing. In the method as disclosed herein the reducing agent may be any reducing agent suitable for use in food application, more particularly in bakery or patisserie applications. Non-limiting examples of suitable reducing agents may be chosen among cysteine (L-cysteine), glutathione, deactivated (non-leavening) yeast and sulphites (sodium metabisulfite). The skilled person knows that the type of reducing agent may be chosen according to the process used. For example, sodium metabisulphite, a more powerful dough relaxing agent, is generally used on (straight) extrusion lines whereas L-cysteine or deactivated yeast, being less aggressive, are more commonly used in semi-automated process, avoiding the destruction of the dough gluten network during the overnight resting.

In a particular embodiment, the reducing agent is sodium metabisulphite and is present in or added to the batter in an amount between 5.0 and 20 g / 100 kg of flour, particularly between 10 and 15 g / 100 kg flour, or the reducing agent is deactivated yeast and is present in or added to the batter in an amount between 500 g and 3000 g / 100 kg of flour, preferably between 1500 and 2500 g / 100 kg flour.

In a particular embodiment of the method according to the present invention, the method comprises the steps of

(a) preparing a batter, wherein the batter comprises, expressed on flour weight:

- 100 wt% flour, preferably flour having a P/L ratio between 0.5 and 3, even more preferably flour having a P/L ratio between 0.5 and 2, such as below 1, particularly wherein the P/L ratio is determined as described elsewhere herein, more particularly wherein the P/L ratio is determined with an alveograph test according to AACC International Method 54-30.1999 or ICC Standard No. 121.1992;;
- 100-250 wt% water;
- one or more monoglycerides, preferably wherein said monoglycerides are saturated monoglycerides in powder form, having an iodine value lower or equal to 5.0, and wherein at least 70.0% of the monoglycerides in powder form have a particle size between 50 and 200 $\mu$m, in an amount between 100 and 2000 g/100 kg flour;
- at least one protease enzyme, preferably wherein the at least one protease enzyme is a thermophilic serine protease, particularly having an optimum activity at a temperature higher than 70.0 °C, more preferably wherein said protease is a Taq protease, such as *Thermus aquaticus* aqualysin I or aqualysin II, in an amount between 30 and 1000 protease units/100 kg flour, wherein the protease activity is measured on azurine crosslinked casein as substrate using the method as described in example 1;
- at least one lipase enzyme, preferably wherein the at least one lipase enzyme is a phospholipase, such as a phospholipase A enzyme, in an amount between 2300 to 60000 phospholipase units/100 kg flour, wherein the phospholipase activity is measured using 1,2-Dioleoyl-sn-glycero-3-phospho-rac-1-glycerol as substrate using the method as described in example 1; and;
- optionally 0-15 wt% oil, particularly 5-15 wt% oil;
- optionally 5-60 wt% native starch, particularly 25-50 wt% native starch;
- optionally 0-10 wt% eggs and/or milk powder, particularly 4-10 wt% eggs and/or milk powder;
- optionally 0-15 wt% sugar and/or sugar syrup, particularly 5-15 wt% sugar and/or sugar syrup; and
- optionally a reducing agent, wherein when said reducing agent is sodium metabisulphite, it is present in an amount between 5.0 and 20.0 g / 100 kg of flour, or when said reducing agent is deactivated yeast, it is present in an amount between 500 and 3000 g / 100 kg of flour;

(b) optionally resting the batter between 0 min and 16 hours, and
(c) extruding or processing the batter into individual batter strands with diameter between 0.4 and 3.0 mm, preferably between 0.5 and 2.0 mm, and
(d) baking the batter strands, preferably for a period between 10 and 60 s at a temperature between 180 and 220 °C, thereby obtaining the baked batter strands of diameter between 0.4 and 3.0 mm, preferably between 0.5 and 2.0 mm.

In a particular embodiment, the batter comprises, expressed on flour weight basis, 100 wt% flour, preferably wheat flour; between 150 and 250 wt% water; between 1 and 3 wt% eggs; between 0.5 and 1.5 wt% salt (NaCl); between 5 and 15 w% starch (w/w of flour), preferably corn starch; one or more monoglycerides, particularly saturated monoglycerides, as specified herein, in an amount between 100 and 2000 g/100 kg flour, preferably in an amount between 300 and 800 g/100 kg flour; at least one thermophilic serine protease as specified herein, in an amount between 30 and 1000 protease units/100 kg flour, preferably in an amount between 50 and 600 protease units/100 kg flour; at least one phospholipase as specified herein, in an amount between 2300 to 60000 phospholipase units / 100 kg of flour, preferably in an amount between 5750 to 48000 phospholipase units / 100 kg of flour, more preferably in an amount between 11500 and 23000 phospholipase units / 100 kg of flour ; and optionally a reducing agent, such as sodium metabisulfite in an amount between 0.005 and 0.02 wt%, preferably between 0.01 and 0.015 wt% or deactivated yeast in an amount between 0.5 and 3 wt%, preferably between 1.5 and 2.5 wt%.

In the method of the present invention the ingredients of the batter are mixed in any order by any method known in the art, including hand mixing and mechanical mixing.

In the method of the present invention the dough is preferably allowed to rest for a period between 0 min and 16 hours, preferably between 0 min and 6 hours, such as overnight.

In the method of the present invention, after the optional resting step, the batter is processed into so-called batter strands, i.e. very thin, long batter threads, more particularly to baked batter strands, i.e. very thin, long baked batter threads.

In the context of the present invention, a batter strand, in particular a baked batter strand, is very thin baked batter thread, characterized by a mean diameter between 0.4 and 3.0 mm, preferably between 0.5 and 2.0 mm, more preferably between 0.5 and 1.5 mm. The length of the individual batter strands is at least 30 cm or 50 cm, such as between 50 cm and 200 cm. The batter strands or baked batter strands may be obtained by any process known in the art. Baked batter strands, i.e. very thin dough baked batter threads, may be obtained by extrusion of the batter through a nozzle using any suitable equipment and baking the extruded batter. Extrusion may be done by pushing or spraying the batter through a die or a nozzle or by letting the batter freely flow through a die or a nozzle. Preferably, the extrusion is done by letting the batter freely flow through a nozzle having a round section with an internal diameter between 0.4 and 3.0 mm, preferably between 0.5 and 2.0 mm, thereby forming a long, continuous batter strand as envisaged herein.

After being extruded the batter is immediately baked (cooked), preferably on a rotating hot plate situated below the nozzle(s). The baking is typically performed for a period between 10 and 60 seconds, preferably between 10 and 40 seconds at a temperature between 180 and 220°C.

It is a further embodiment of the present invention to provide the use of a composition to prepare baked batter strands, i.e. very thin baked batter threads, wherein the composition comprises flour; water; one or more monoglycerides as specified herein, particularly in an amount between 100 and 2000 g/100 kg flour, preferably in an amount between 300 and 800 g/100 kg flour; at least one protease as specified herein, preferably in an amount between 30 and 1000 protease units/100 kg flour, preferably in an amount between 50 and 600 protease units/100 kg flour; at least one lipase, particularly phospholipase, preferably in an amount between 2300 and 60000 phospholipase units / 100 kg of flour, preferably in an amount between 5750 to 48000 phospholipase units / 100 kg of flour, more preferably in an amount between 11500 and 23000 phospholipase units / 100 kg of flour; optionally a reducing agent; optionally starch and oil; optionally eggs and/or milk powder; and wherein the very thin baked batter threads / batter strands have a diameter between 0.4 and 3.0 mm, preferably between 0.5 and 2.0 mm, more preferably between 0.5 and 1.5 mm.

The combination of monoglycerides, protease and lipase, and, optionally, a reducing agent, as envisaged in the present invention may be in the form of or may be part of an improver composition. An "improver" or "improver composition" (also referred to as "bread improver", "Arabic sweets improver", "dough/batter conditioner", "dough/batter improver" or "improving agent" or "flour treatment agent") is typically added to the batter before/during the baking process in order to improve texture, volume, flavour and freshness of the baked product as well as to improve machinability and stability of the batter/dough.

Accordingly, a further aspect of the present invention provides an improver composition comprising the one or more monoglycerides, the protease and the lipase as specified elsewhere herein. The present invention thus further provides for an improver composition comprising (a) one or more monoglycerides, preferably wherein said monoglycerides are saturated monoglycerides, having an iodine value lower than or equal to 5, preferably lower than or equal to 2.5 or 2.0, and preferably wherein the monoglycerides are in powder form, wherein at least 70% of the monoglycerides have a particle size between 50 and 200 $\mu$m; (b) at least one protease enzyme, preferably wherein said protease enzyme is a thermophilic serine protease enzyme; and (c) at least one lipase enzyme, preferably wherein said lipase enzyme is a phospholipase enzyme. More in particular, the protease enzyme, particularly the thermophilic serine protease, is present in the improver composition in an amount between 0.01 and 10.0 protease units per g of said one or more monoglycerides; and/or the lipase enzyme, particularly the phospholipase, is present in the improver composition in an amount between 1 and 600 phospholipase units per g of said one or more monoglycerides.

In a preferred embodiment, the improver composition in powder form comprises:

- one or more monoglycerides, wherein said monoglycerides are saturated monoglycerides in powder form, having an iodine value lower or equal to 5, and wherein at least 70% of the monoglycerides in powder form have a particle size between 50 and 200 $\mu$m;
- at least one protease enzyme, wherein said protease enzyme is a thermophilic serine protease having an optimum activity at a temperature higher than 70.0°C;
- at least one lipase enzyme, wherein said lipase enzyme is a phospholipase;

wherein the protease enzyme is present in the improver composition in an amount between 0.01 and 10 protease units per g of said one or more monoglycerides; and

wherein the lipase enzyme is present in the improver composition in an amount between 1 and 600 phospholipase units per g of said one or more monoglycerides;

wherein the protease activity is measured on azurine crosslinked casein as substrate using the method described in example 1 and wherein the phospholipase activity is measured using 1,2-Dioleoyl-sn-glycero-3-phospho-rac-1-glycerol as substrate using the method described in example 1.

Optionally, the improver composition may comprise a reducing agent, particularly wherein the reducing agent is sodium metabisulphite or deactivated yeast.

In certain embodiments, the improver composition according to the present invention, as used in the method described herein, may further comprise appropriate amounts of one or more additional enzymes (such as e.g. amylases, xylanases, oxidases, lipoxygenases, dehydrogenases and laccases), one or more lipid materials (such as e.g. margarine, butter, oil, shortening), one or more vitamins (such as e.g. pantothenic acid and vitamin E), one or more gums, and/or one or more sources of fibre (such as e.g. oat fibre).

In particular embodiments, the improver composition is in powdered form.

The methods for preparing a batter strand according to the present invention result in a batter strand or a baked batter strand that shows improved properties when compared to a batter strand not comprising the particular combination of ingredients (i.e. monoglycerides, protease, lipase, and, optionally, a reducing agent). More particularly, the batter obtained by the method of the invention is more resistant to breakage during the extrusion step, thus allowing to prepare thinner and longer batter strands compared to a batter not comprising the particular combination of ingredients of the present invention. In addition, thinner batter strands result in a superior baked batter strand product, both after baking/frying and during storage.

Accordingly, another related aspect of the present invention provides a baked batter strand obtained according to a method according to the present invention, particularly having a diameter between 0.4 and 3.0 mm, more particularly between 0.5 and 2.0 mm. The batter strand comprises flour; water; one or more monoglycerides as specified elsewhere herein, particularly wherein the one or more monoglycerides have an iodine value lower or equal to 5.0, preferably wherein the one or more monoglycerides are in powder form and wherein at least 70% of said one or more monoglycerides have a particle size lower than 200 $\mu$m, such as between 50 and 200 $\mu$m; at least one protease enzyme, preferably a thermophilic serine protease enzyme as specified elsewhere herein; at least one lipase enzyme, preferably a phospholipase enzyme, as specified elsewhere herein; optionally oil and/or starch; optionally sugar and/or sugar syrup; optionally eggs and/or milk powder; and, optionally a reducing agent.

In particular embodiments, the one or more monoglycerides as specified elsewhere herein are present in the batter strand in an amount between 100 and 2000 g/100 kg flour, preferably between 200 and 1500 g / 100 kg of flour, more preferably between 300 and 800 g / 100 kg of flour; and/or the at least one protease enzyme as specified elsewhere herein is present in the dough in an amount between 30.0 and 1000.0 protease units/100 kg flour, preferably between 50 to 600 protease units / 100 kg of flour, more preferably between 100 to 200 protease units / 100 kg of flour; and/or the at least one lipase enzyme as specified elsewhere herein is present in the dough sheet in an amount between 2300 and 60000 phospholipase units / 100 kg of flour, preferably in an amount between 5750 to 48000 phospholipase units / 100 kg of flour, more preferably in an amount between 11500 and 23000 phospholipase units / 100 kg of flour, with the enzyme activities as detailed elsewhere herein. Optionally, the reducing agent is sodium metabisulphite and is present in the dough in an amount between 5.0 and 20 g / 100 kg of flour, or the reducing agent is deactivated yeast and is present in the dough an amount between 500 and 3000 g / 100 kg of flour.

The baked batter strands of the present invention are particularly suited for preparing baked batter strand based pastries and related baked products, such as Arabic sweets. Non-limiting examples of such pastries are Borma type products.

Another related aspect of the present invention provides a method to obtain a baked batter strand based product, such as an Arabic sweet, particularly Borma, comprising the steps of:

(i) preparing baked batter strands according to a method of the present invention, particularly by (a) preparing a batter comprising flour; water; one or more monoglycerides as specified herein; particularly saturated monoglycerides in powder form, having an iodine value lower or equal to 5.0, and wherein at least 70.0% of the monoglycerides in powder form have a particle size between 50 and 200 $\mu$m, particularly in an amount between 100 and 2000 g/100 kg flour; at least one protease enzyme, preferably wherein said protease enzyme is a thermophilic serine protease enzyme, particularly in an amount between 30 and 1000 protease units/100 kg flour; at least one lipase enzyme, preferably wherein said lipase enzyme is a phospholipase enzyme, particularly in an amount between 2300 and 60000 phospholipase units / 100 kg of flour; optionally starch and/or oil, sugar and/or sugar syrup, optionally eggs and/or milk powder, and, optionally one or more reducing agents; (b) optionally resting the batter, (c) extruding or processing the batter into individual batter strands, particularly wherein the individual batter strands have a diameter between 0.4 mm and 3.0 mm, preferably between 0.5 and 2.0 mm, and (d) baking the batter strands,
(ii) rolling a plurality of the baked batter strands around a filling, thereby obtaining a rolled and filled product;
(iii) soaking the rolled and filled product in fat or oil;
(iv) frying the rolled and filled product in the fat or oil, preferably between 20 and 60 minutes at a temperature between 150°C and 200°C;
(v) cooling the fried products;
(vi) soaking the fried products in sugar syrup, thereby obtaining a baked batter strand based product; and
(vii) optionally, cutting and packaging the baked batter strand based products.

In a particular embodiment, the baked batter strand based product is a borma-type product and the batter prepared in step (i) comprises, expressed on flour weight basis, 100 wt% flour, preferably wheat flour; between 150 and 250 wt% water; between 1 and 3 wt% eggs and/or milk powder; between 0.5 and 1.5 wt% salt (NaCl); between 5 and 60 wt% starch (w/w of flour), preferably corn starch; one or more monoglycerides, particularly saturated monoglycerides, as specified herein, in an amount between 100 and 2000 g/100 kg flour, preferably in an amount between 300 and 800 g/100 kg flour; at least one thermophilic serine protease as specified herein, in an amount between 30.0 and 1000.0 protease units/100 kg flour, preferably between 50 to 600 protease units / 100 kg of flour; at least one phospholipase as specified herein, in an amount between 2300 and 60000 phospholipase units / 100 kg of flour, preferably in an amount between 5750 to 48000 phospholipase units / 100 kg of flour, more preferably in an amount between 11500 and 23000 phospholipase units / 100 kg of flour; and optionally a reducing agent, such as sodium metabisulfite in an amount between 0.005 and 0.02 wt%, preferably between 0.01 and 0.015 wt% or deactivated yeast in an amount between 0.5 and 3 wt%, preferably between 1.5 and 2.5 wt%.

The filling of the product may be sweet or savory, depending on the product type. Typically, the filling is a nut-based fillings, including but not limited to pistachio, peanut, cashew nut, walnuts, almond, etc.

The filling is generally inserted within a plurality of baked batter strands, with the amount of baked batter strands depending on the desired product type.

After shaping the pieces are soaked in fat or oil and left/subject to a resting step to absorb the fat. Preferably the fat is animal or vegetable ghee or a combination thereof. More preferably the fat is melted animal ghee.

After the fat soaking or fat absorption step the pieces are baked by deep frying in oil/fat. Deep frying may be performed at a temperature between 150 and 200°C, particularly between 170 and 190°C, for a duration of between 20 and 60 min.

In certain embodiments, after baking and subsequent cooling, the baked pieces may be soaked in a sugar syrup, such as, but not limited to, sucrose syrup, and thereafter drained to remove the excess sugar syrup.

In some embodiments, the finished products may be packed in a suitable packaging.

The methods and compositions of the present invention allow to obtain finished products having improved properties over their full shelf life compared to conventionally obtained products. The products obtained by the methods of the present invention are crispier and have a softer mouth feel. They do not exhibit a tendency to become dry and/or soggy during storage: they maintain their crispiness and shiny character during the shelf life. In addition, the shininess of the product surface is improved.

The present invention further provides for the use of a baked batter strand as specified elsewhere herein or the use of an improver composition as specified elsewhere herein, for the production of baked batter strand based products or baked batter strand based pastry, with improved appearance and properties.

## EXAMPLES

Example 1:

*Enzyme activities determination*

The protease activity is measured on azurine crosslinked casein (AZCL-casein). This substrate is prepared by dyeing and crosslinking casein to produce a material which hydrates in water but is water-insoluble. Hydrolysis by proteases produces water soluble dyed fragments, and the rate of release of these (increase in absorbance at 590 nm) can be related directly to enzyme activity (Protazyme AK Tablets, Megazyme, Ireland). A protazyme AK tablet is incubated in 100 mM $Na_2HPO_4.2H_2O$; pH 7.0 at 60°C for 5 min. An aliquot of enzyme (1.0 ml) is added and the reaction is allowed to continue for exactly 10 min. The reaction is terminated by the addition of tri-sodium phosphate (10 ml, 2% w/v, pH 12.3). The tube stands for approx. 2 min at room temperature and the content is filtered. The absorbance of the filtrate is measured at 590 nm against a substrate blank.

The activity is expressed as:

$$mU(milliunits)/ml = (34.2 * (Abs_{590} \text{ enzyme} - Abs_{590} \text{ blank}) + 0.6) / \text{dilution}.$$

One protease unit corresponds to 1000 mU.

The phospholipase activity is measured using 1,2-Dioleoyl-sn-glycero-3-phospho-rac-1-glycerol (DOPG) as substrate. The release of free fatty acid by phospholipase is measured by spectrophotometry at 550nm. 10 $\mu$L of 1% DOPG substrate solution (dissolved in 0.1M Na-phosphate buffer at pH 7.5 containing 5% of Na-deoxycholate) are mixed with 10 $\mu$L of enzyme sample and incubated at 30°C for 15min. Afterwards, 2 $\mu$L of 1M orthophosphoric acid are added to stop the reaction. The released free fatty acid are measured using the kit NEFA-HR(2) kit from Fujifilm following the manufacturer instructions (addition of 200 $\mu$L of reagent R1 and incubation at 37°C for 10 min; addition of 100 $\mu$L of reagent R2 and incubation at 37°C for 10min . A calibration curve is established by use of different concentrations of oleic acid provided in the kit. The absorbance is measured at 550nm against a blank sample in 96-wells microplate.

One phospholipase activity unit (NefU) is defined as the amount of enzyme needed to release 1 nmol of free fatty acid per minute at 30°C pH7.5.

*Monoglycerides iodine value determination*

The method is based on the official methods AOCS Cd 1-25 and AOAC 981.11 with some modifications.

A sample of about 1 g is weighed and melted at max.10 °C above the melting point of the fat. 15 ml of Carbon tetrachloride $CCl_4$ and 15 ml of Diethyl ether are added.

A blank sample is prepared with the reagents but without the sample.

25.0 ml of Wijs solution is added to the sample in a flask, followed by shaking. The flasks are put in a dark environment for 1 hour. After this, 3 g of potassium iodide and 150 ml of water are added. The solution is then titrated with continuous shaking with a 0.1N sodium thiosulfate solution to a light-yellow colour. Starch indicator (soluble starch) is added and the titration is continued to the disappearance of the blue colour.

The Iodine value expressed in g $I_2$/ 100 g of product is equal to ((B-T)/P)*1.269

where B is the amount of ml sodium thiosulfate for the blank

T is the amount of ml sodium thiosulfate for the sample

P is the weight of the sample in g

1.269 is the molecular weight of iodine / 100

*Monoglycerides particle size determination*

The particle size is measured with a Lazer Diffractor LS 200 (Beckman Coulter) using the recommendations of the supplier.

### Example 2 : Borma

*Enzymes:*

- TaProt: *Thermus aquaticus* Taq1 protease. (aqualysine I) as described in WO2009138447A1. The enzyme has an optimum of temperature activity of 80°C.
- VaLip: *Valsaria rubricosa* phospholipase A1 as described in WO2018150021A1.

*Monoglycerides*

- Multec mono 90 SH: distilled monoglycerides based on vegetable oil; mean particle size: 90 $\mu$m; iodine value (as $I_2$) between 0 and 2 g/100g (Puratos; Belgium);

*Preparation of the batters*

Borma batters were prepared using the ingredients of table 4.

Table 4

| in baker's % | BOREf | BO1 | BO2 |
|---|---|---|---|
| Wheat Flour (Blue Camel - Jordan South Mills) (P/L 1.5) | 100 | 100 | 100 |
| Water | 180 | 180 | 180 |
| Corn Starch | 50 | 50 | 50 |
| Milk powder | 1 | 1 | 1 |
| Vegetable oil | 1.5 | 1.5 | 1.5 |
| Deactivated yeast (Extendo - Puratos) | | 1 | 2 |
| Multec Mono 90 SH | | 0.5 | 1 |
| TaProt (units/100 kg flour) | | 100 | 200 |

(continued)

| in baker's % | BOREf | BO1 | BO2 |
|---|---|---|---|
| VaLip (units/100 kg flour) | | 8900 | 17800 |

*Process*

Batter ingredients are mixed using a paddle mixer for 15 min to reach a batter consistency like French crepes. The batter is then filled in a hopper. The batter flows out of the hopper through tiny nozzles (diameter 1.5 mm) by gravity and the continuous batter strands fall onto a rotating hot plate (about 200°C) where the strands are baked for about 20 seconds. The baked batter strands are scraped off from the hop plate and the batter strands are stacked to cool down to room temperature.

*Evaluation of the batters*

BORef (reference)
The batter was not able to form a thin thread as it was cutting too fast during the dripping phase from the hopper. Intact long threads were only obtained by increasing the diameter of the threads up to 1.4 - 1.5 mm, which is not desirable for high quality Borma.

BO1
BO1 batter had a smoother texture than the reference and was more easily processed through the hoppers: it had a better flowability than the reference. The batter strands were finer than the reference during gravity depositing and showed less breaking during extrusion. After cooling, the strands were still fragile but could be cut more smoothly than the reference BORef.

BO2

BO2 batter was smooth and was perfectly processed through the nozzles of the hopper (free flowing). The batter did not drip or break even when the thickness of the baked batter strand was reduced to a thickness of 0.55-0.65 mm. After cooling, the very thin baked batter strands were smooth, silky soft and not dry. They could be rolled softly without dryness being observed. The strands were well lined up and consistent in shape. Colour of the batter stands was whiter than the reference.
The BO2 batter had the best depositing properties and the finest strand thickness as the batter was free flowing into the hot pan. After the baking, the threads were smooth, silky soft and not dry, which resulted in smoother rolling once pistachios were put and rolled up.

*Preparation of the Bormas*

The baked batter strands were processed into Borma products, by performing the following steps:

- Roll up multiple baked batter strands round a nut-based filling and stack the rolls parallel to each other in deep aluminium trays. The nut filling is made of crushed pistachios mixed with sugar and glucose syrup and little of rose water.
- Soak the rolled products with ghee and let them rest for 1 hour so that the baked batter strands rolled with the nut filling fully absorb the ghee.
- Deep fry the products in the tray in hot oil/fat at 180 °C for 35 minutes until a golden brown colour is achieved.
- Take out the trays from deep-frying oil and let the excess oil drain for 1 hour.
- After cooling, soak the products in the trays in sugar syrup for 1 hour to absorb the maximum of sugar syrup.
- Drain out the excess sugar syrup for 24 hours.
- Cut and pack the Borma products.

*Evaluation of the Borma products*

Bormas made with the reference batter

When rolling the strands round the pistachios based filling, it was observed that the rolling performance of the baked batter strands was poor and that the final rolled pastry was dry prior to frying. After cooling and during cutting, the Borma products had a poor cohesiveness. Bormas were made of rather thick threads that were soggy and had absorbed a lot of oil and sugar syrup. The lining of the threads was not uniform and thick.

Bormas made with BO1 batter

Some dryness was noticed during rolling of the Bormas pastries but to a lesser extent than the reference. Bormas were more crunchy and less soggy than the reference. They were smoother in the cutting compared to the reference.

Bormas made with BO2 batter

The baked batter strands were rolled smoothly around the pistachios filling. After frying, the threads were more golden, crispy and absorbed less sugar syrup than the reference and the B01 Bormas during soaking. Importantly, the drained fat quantity increased by 12% and the drained sugar syrup increased by 8% compared to the reference indicating a lower oil and sugar absorption during the deep frying and sugar syrup soaking.

Improved slicing (less pastries breaking) after cooling was observed compared to the BO1 Bormas. Bormas had a uniform shape and colour. The strand lining was more uniform and smoother than in the reference and the BO1 Bormas.

It was further also observed that the Bormas made with the BO1 and particularly with the BO2 batter had a decreased rate of stiffening/hardening during storage, compared to the BORef Bormas. The specific combination of monoglycerides, protease and phospholipase thus resulted in a retarded firming of the Bormas during storage.

**Claims**

1.  A method to obtain baked batter strands, wherein the method comprises the steps of:

    (a) preparing a batter comprising

      - flour, water,
      - one or more monoglycerides, wherein the one or more monoglycerides have an iodine value lower or equal to 5.0, wherein the one or more monoglycerides are in powder form, and wherein at least 70.0% of said monoglycerides have a particle size lower than 200 $\mu$m;
      - at least one protease enzyme, wherein said protease enzyme is a thermophilic serine protease having an optimum activity at a temperature higher than 70.0°C;
      - at least one lipase enzyme, wherein said lipase enzyme is a phospholipase;
      - optionally starch and/or oil,
      - optionally sugar and/or sugar syrup,
      - optionally eggs and/or milk powder, and,
      - optionally one or more reducing agents;

    (b) optionally resting the batter,
    (c) extruding or processing the batter into individual batter strands, particularly wherein the individual batter strands have a diameter between 0.4 mm and 3.0 mm, preferably between 0.5 and 2.0 mm, and
    (d) baking the batter strands, thereby obtaining the baked batter strands, particularly wherein the baked batter strands have a mean diameter between 0.4 mm and 3.0 mm, preferably between 0.5 and 2.0 mm.

2.  The method according to claim 1, wherein the one or more monoglycerides are present in the batter in an amount between 100 and 2000 g/100 kg flour; and/or wherein the at least one protease enzyme is present in the batter in an amount between 30 and 1000 protease units/100 kg flour; and/or wherein the at least one lipase enzyme is present in the batter in an amount between 2300 and 60000 phospholipase units /100 kg flour; wherein the protease activity is measured on azurine crosslinked casein as substrate using the method as described in example 1 and wherein the phospholipase activity is measured using 1,2-Dioleoyl-sn-glycero-3-phospho-rac-1-glycerol as substrate using the method as described in example 1.

3.  The method according to claim 1 or claim 2, , wherein at least 70.0% of said monoglycerides have a particle size lower than 150 $\mu$m; and/or

    wherein the at least one protease enzyme is a thermophilic serine protease having an optimum activity at a temperature higher than 75.0°C, preferably at a temperature higher than 80.0°C; and/or
wherein the at least one lipase enzyme is a phospholipase A, preferably a phospholipase A1.

4. The method according to any one of claims 1 to 3, wherein the batter strand or the baked batter strand has a length of at least 30 cm or 50 cm.

5. The method according to any one of claims 1 to 4, wherein the method comprises the steps of

(a) preparing a batter, wherein the batter comprises expressed on flour weight:

- 100 wt% flour, preferably flour having a P/L ratio between 0.5 and 3, even more preferably flour having a P/L ratio between 0.5 and 2, wherein the P/L ratio is determined with an alveograph test according to AACC International Method 54-30.1999 or ICC Standard No. 121.1992;
- 100-250 wt% water;
- one or more monoglycerides, wherein said monoglycerides are saturated monoglycerides in powder form, having an iodine value lower or equal to 5.0, and wherein at least 70.0% of the monoglycerides in powder form have a particle size between 50 and 200 μm, in an amount between 100 and 2000 g/100 kg flour;
- at least one protease enzyme, wherein said protease enzyme is a thermophilic serine protease having an optimum activity at a temperature higher than 70.0°C, in an amount between 30 and 1000 protease units/100 kg flour, wherein the protease activity is measured on azurine crosslinked casein as substrate using the method as described in example 1;
- at least one lipase enzyme, wherein said lipase enzyme is a phospholipase, in an amount between 2300 and 60000 phospholipase units/100 kg flour, wherein the phospholipase activity is measured using 1,2-Dioleoyl-sn-glycero-3-phospho-rac-1-glycerol as substrate using the method as described in example 1; and;
- optionally 0-15 wt% oil, particularly 5-15 wt% oil;
- optionally 5-60 wt% native starch, particularly 25-50 wt% native starch;
- optionally 0-10 wt% eggs and/or milk powder, particularly 4-10 wt% eggs and/or milk powder;
- optionally 0-15 wt% sugar and/or sugar syrup, particularly 5-15 wt% sugar and/or sugar syrup; and
- optionally a reducing agent, wherein when said reducing agent is sodium metabisulphite, it is present in an amount between 5.0 and 20.0 g / 100 kg of flour, or when said reducing agent is deactivated yeast, it is present in an amount between 500 and 3000 g / 100 kg of flour;

(b) optionally resting the batter between 0 min and 16 hours, and
(c) extruding or processing the batter into individual batter strands with diameter between 0.4 and 3.0 mm, preferably between 0.5 and 2.0 mm, and
(d) baking the batter strands, preferably for a period between 10 and 60 s at a temperature between 180 and 220 °C, thereby obtaining the baked batter strands of diameter between 0.4 and 3.0 mm, preferably between 0.5 and 2.0 mm.

6. A method to obtain a baked batter strand based product, comprising the steps of:

(i) preparing baked batter strands according to a method as defined in any one of claims 1 to 5;
(ii) rolling a plurality of the baked batter strands around a filling, thereby obtaining a rolled and filled product;
(iii) soaking the rolled and filled product in fat or oil;
(iv) frying the rolled and filled product in the fat or oil, preferably between 20 and 60 minutes at a temperature between 150°C and 200°C;
(v) cooling the fried products;
(vi) soaking the fried products in sugar syrup, thereby obtaining a baked batter strand based product; and
(vii) optionally, cutting and packaging the baked batter strand based products.

7. The method according to claim 6, wherein the filling is a nut-based filling, particularly comprising pistachio, peanut, cashew nut, walnut, almond, and the like.

8. The method according to claim 6 or 7, wherein the baked batter strand based product is a borma-type product.

9. The method according to any one of claims 6 to 8, wherein the baked batter strand based product, preferably the borma-type product, has absorbed at least 5% less oil or fat and at least 5% less sugar during the preparation of the product, particularly during the step of frying in fat or oil and during the soaking in sugar syrup, respectively, compared to a baked batter strand based product prepared without the one or more monoglycerides, the at least one protease enzyme and the at least one lipase enzyme.

10. A baked batter strand, particularly having a diameter between 0.4 and 3.0 mm, more particularly between 0.5 and 2.0 mm, obtained by a method according to any one of claims 1 to 5, comprising

 - flour, water,
 - one or more monoglycerides, wherein the one or more monoglycerides have an iodine value lower or equal to 5.0, wherein the one or more monoglycerides are in powder form, and wherein at least 70.0% of said monoglycerides have a particle size lower than 200 $\mu$m,
 - at least one protease enzyme, wherein said protease enzyme is a thermophilic serine protease having an optimum activity at a temperature higher than 70.0°C,
 - at least one lipase enzyme, wherein said lipase enzyme is a phospholipase,
 - optionally starch and/or oil,
 - optionally eggs and/or milk powder, and
 - optionally one or more reducing agent.

11. The baked batter strand according to claim 10, wherein the protease enzyme is a thermophilic serine protease having an optimum activity at a temperature higher than 75.0°C, preferably at a temperature higher than 80.0°C; and/or

 wherein the lipase enzyme is a phospholipase A enzyme, preferably a phospholipase A1 enzyme; and/or
 wherein at least 70.0% of said monoglycerides have a particle size lower than 150 $\mu$m.

12. The baked batter strand according to claim 10 or 11, wherein

 - the one or more monoglycerides are present in an amount between 100 and 2000 g/100 kg flour;
 - the at least one protease enzyme is present in an amount between 30 and 1000 protease units/100 kg flour, wherein the protease activity is measured on azurine crosslinked casein as substrate using the method as described in example 1; and/or
 - the at least one lipase enzyme is present in an amount between 2300 and 60000 phospholipase units /100 kg flour, wherein the phospholipase activity is measured using 1,2-Dioleoyl-sn-glycero-3-phospho-rac-1-glycerol as substrate using the method as described in example 1.

13. An improver composition in powder form, comprising:

 - one or more monoglycerides, wherein said monoglycerides are saturated monoglycerides in powder form, having an iodine value lower or equal to 5, and wherein at least 70% of the monoglycerides in powder form have a particle size between 50 and 200 $\mu$m;
 - at least one protease enzyme, wherein said protease enzyme is a thermophilic serine protease having an optimum activity at a temperature higher than 70.0°C;
 - at least one lipase enzyme, wherein said lipase enzyme is a phospholipase;
 wherein the protease enzyme is present in the improver composition in an amount between 0.01 and 10 protease units per g of said one or more monoglycerides; and
 wherein the lipase enzyme is present in the improver composition in an amount between 1 and 600 phospholipase units per g of said one or more monoglycerides,
 wherein the protease activity is measured on azurine crosslinked casein as substrate using the method described in example 1 and wherein the phospholipase activity is measured using 1,2-Dioleoyl-sn-glycero-3-phospho-rac-1-glycerol as substrate using the method described in example 1.

14. The improver composition according to claim 13, wherein the protease enzyme is a thermophilic serine protease enzyme having an optimum activity at a temperature higher than 75.0°C, preferably at a temperature higher than 80.0°C; and/or
 wherein the lipase enzyme is a phospholipase A enzyme, preferably a phospholipase A1 enzyme.

15. Use of the baked batter strand according to any one of claims 10 to 12, or use of the improver composition according to claim 13 or 14, for the preparation of baked batter strand based products, particularly for the preparation of baked batter strand based products with reduced absorption of oil or fat and sugar during the preparation of the product, compared to a baked batter strand based product prepared without the one or more monoglycerides, the at least one protease enzyme and the at least one lipase enzyme.

**Patentansprüche**

1. Verfahren zum Erhalten gebackener Teigstränge, wobei das Verfahren die Schritte umfasst:

    (a) Zubereiten eines Teigs, umfassend

        - Mehl, Wasser,
        - ein oder mehrere Monoglyceride, wobei das eine oder die mehreren Monoglyceride eine Iodzahl niedriger oder gleich 5,0 aufweisen, wobei das eine oder die mehreren Monoglyceride in Pulverform vorliegen, und wobei mindestens 70,0 % der Monoglyceride eine Partikelgröße niedriger als 200 μm aufweisen;
        - mindestens ein Proteaseenzym, wobei das Proteaseenzym eine thermophile Serinprotease ist, die eine optimale Aktivität bei einer Temperatur höher als 70,0 °C aufweist;
        - mindestens ein Lipaseenzym, wobei das Lipaseenzym eine Phospholipase ist;
        - optional Stärke und/oder Öl,
        - optional Zucker und/oder Zuckersirup,
        - optional Eier und/oder Milchpulver, und,
        - optional ein oder mehrere Reduktionsmittel;

    (b) optional Ruhenlassen des Teigs,
    (c) Extrudieren oder Verarbeiten des Teigs zu einzelnen Teigsträngen, insbesondere wobei die einzelnen Teigstränge einen Durchmesser zwischen 0,4 mm und 3,0 mm, vorzugsweise zwischen 0,5 und 2,0 mm, aufweisen, und
    (d) Backen der Teigstränge, wodurch die gebackenen Teigstränge erhalten werden, insbesondere wobei die gebackenen Teigstränge einen mittleren Durchmesser zwischen 0,4 mm und 3,0 mm, vorzugsweise zwischen 0,5 und 2,0 mm, aufweisen.

2. Verfahren nach Anspruch 1, wobei das eine oder die mehreren Monoglyceride in dem Teig in einer Menge zwischen 100 und 2000 g/100 kg Mehl vorhanden sind; und/oder wobei das mindestens eine Proteaseenzym in dem Teig in einer Menge zwischen 30 und 1000 Proteaseeinheiten/100 kg Mehl vorhanden ist; und/oder wobei das mindestens eine Lipaseenzym in dem Teig in einer Menge zwischen 2300 und 60000 Phospholipaseeinheiten/100 kg Mehl vorhanden ist; wobei die Proteaseaktivität an azurinvernetztem Casein als Substrat unter Verwendung des Verfahrens, wie in Beispiel 1 beschrieben, gemessen wird und wobei die Phospholipaseaktivität unter Verwendung von 1,2-Dioleoyl-sn-glycero-3-phospho-rac-1-glycerol als Substrat unter Verwendung des Verfahrens, wie in Beispiel 1 beschrieben, gemessen wird.

3. Verfahren nach Anspruch 1 oder Anspruch 2, , wobei mindestens 70,0 % der Monoglyceride eine Partikelgröße niedriger als 150 μm aufweisen; und/oder

    wobei das mindestens eine Proteaseenzym eine thermophile Serinprotease ist, die eine optimale Aktivität bei einer Temperatur höher als 75,0 °C, vorzugsweise bei einer Temperatur höher als 80,0 °C, aufweist; und/oder
    wobei das mindestens eine Lipaseenzym eine Phospholipase A, vorzugsweise eine Phospholipase A1, ist.

4. Verfahren nach einem der Ansprüche 1 bis 3, wobei der Teigstrang oder der gebackene Teigstrang eine Länge von mindestens 30 cm oder 50 cm aufweist.

5. Verfahren nach einem der Ansprüche 1 bis 4, wobei das Verfahren die Schritte umfasst

    (a) Zubereiten eines Teigs, wobei der Teig, ausgedrückt auf Mehlgewicht, umfasst:

        - 100 Gew.-% Mehl, vorzugsweise Mehl mit einem P/L-Verhältnis zwischen 0,5 und 3, noch bevorzugter Mehl mit einem P/L-Verhältnis zwischen 0,5 und 2, wobei das P/L-Verhältnis mit einem Alveographentest gemäß AACC International Method 54-30.1999 oder ICC Standard Nr. 121.1992 bestimmt wird;
        - 100-250 Gew.-% Wasser;
        - ein oder mehrere Monoglyceride, wobei die Monoglyceride gesättigte Monoglyceride in Pulverform sind, die eine Iodzahl niedriger oder gleich 5,0 aufweisen, und wobei mindestens 70,0 % der Monoglyceride in Pulverform eine Partikelgröße zwischen 50 und 200 μm aufweisen, in einer Menge zwischen 100 und 2000 g/100 kg Mehl;

- mindestens ein Proteaseenzym, wobei das Proteaseenzym eine thermophile Serinprotease ist, die eine optimale Aktivität bei einer Temperatur höher als 70,0 °C aufweist, in einer Menge zwischen 30 und 1000 Proteaseeinheiten/100 kg Mehl, wobei die Proteaseaktivität an azurinvernetztem Casein als Substrat unter Verwendung des Verfahrens, wie in Beispiel 1 beschrieben, gemessen wird;

- mindestens ein Lipaseenzym, wobei das Lipaseenzym eine Phospholipase ist, in einer Menge zwischen 2300 und 60000 Phospholipaseeinheiten/100 kg Mehl, wobei die Phospholipaseaktivität unter Verwendung von 1,2-Dioleoyl-sn-glycero-3-phospho-rac-1-glycerol als Substrat unter Verwendung des Verfahrens, wie in Beispiel 1 beschrieben, gemessen wird; und;

- optional 0-15 Gew.-% Öl, insbesondere 5-15 Gew.-% Öl;

- optional 5-60 Gew.-% native Stärke, insbesondere 25-50 Gew.-% native Stärke;

- optional 0-10 Gew.-% Eier und/oder Milchpulver, insbesondere 4-10 Gew.-% Eier und/oder Milchpulver;

- optional 0-15 Gew.-% Zucker und/oder Zuckersirup, insbesondere 5-15 Gew.-% Zucker und/oder Zuckersirup; und

- optional ein Reduktionsmittel, wobei, wenn das Reduktionsmittel Natriummetabisulfit ist, es in einer Menge zwischen 5,0 und 20,0 g/100 kg Mehl vorhanden ist, oder wenn das Reduktionsmittel deaktivierte Hefe ist, es in einer Menge zwischen 500 und 3000 g/100 kg Mehl vorhanden ist;

(b) optional Ruhenlassen des Teigs zwischen 0 min und 16 Stunden, und

(c) Extrudieren oder Verarbeiten des Teigs zu einzelnen Teigsträngen mit einem Durchmesser zwischen 0,4 und 3,0 mm, vorzugsweise zwischen 0,5 und 2,0 mm, und

(d) Backen der Teigstränge, vorzugsweise für einen Zeitraum zwischen 10 und 60 s bei einer Temperatur zwischen 180 und 220 °C, wodurch die gebackenen Teigstränge mit einem Durchmesser zwischen 0,4 und 3,0 mm, vorzugsweise zwischen 0,5 und 2,0 mm, erhalten werden.

6. Verfahren zum Erhalten eines Produkts auf Basis gebackener Teigstränge, umfassend die Schritte:

(i) Zubereiten gebackener Teigstränge gemäß einem Verfahren, wie in einem der Ansprüche 1 bis 5 definiert;

(ii) Wickeln einer Vielzahl von gebackenen Teigsträngen um eine Füllung, wodurch ein gerolltes und gefülltes Produkt erhalten wird;

(iii) Tränken des gerollten und gefüllten Produkts in Fett oder Öl;

(iv) Frittieren des gerollten und gefüllten Produkts in dem Fett oder Öl, vorzugsweise zwischen 20 und 60 Minuten bei einer Temperatur zwischen 150 °C und 200 °C;

(v) Abkühlen der frittierten Produkte;

(vi) Tränken der frittierten Produkte in Zuckersirup, wobei ein Produkt auf Basis gebackener Teigstränge erhalten wird; und

(vii) optional Schneiden und Verpacken der Produkte auf Basis gebackener Teigstränge.

7. Verfahren nach Anspruch 6, wobei die Füllung eine nussbasierte Füllung ist, insbesondere umfassend Pistazie, Erdnuss, Cashewnuss, Walnuss, Mandel und dergleichen.

8. Verfahren nach Anspruch 6 oder 7, wobei das Produkt auf Basis gebackener Teigstränge ein Borma-Produkt ist.

9. Verfahren nach einem der Ansprüche 6 bis 8, wobei das Produkt auf Basis gebackener Teigstränge, vorzugsweise das Borma-Produkt, mindestens 5 % weniger Öl oder Fett und mindestens 5 % weniger Zucker während der Herstellung des Produkts, insbesondere während des Schritts des Frittierens in Fett oder Öl bzw. während des Tränkens in Zuckersirup, aufgenommen hat, verglichen mit einem Produkt auf Basis gebackener Teigstränge, das ohne die ein oder mehreren Monoglyceride, das mindestens eine Proteaseenzym und das mindestens eine Lipaseenzym hergestellt wurde.

10. Gebackener Teigstrang, insbesondere einen Durchmesser zwischen 0,4 und 3,0 mm aufweisend, insbesondere zwischen 0,5 und 2,0 mm, erhalten durch ein Verfahren nach einem der Ansprüche 1 bis 5, umfassend

- Mehl, Wasser,

- ein oder mehrere Monoglyceride, wobei die ein oder mehreren Monoglyceride eine Iodzahl kleiner oder gleich 5,0 aufweisen, wobei die ein oder mehreren Monoglyceride in Pulverform vorliegen, und wobei mindestens 70,0 % der Monoglyceride eine Partikelgröße kleiner als 200 μm aufweisen,

- mindestens ein Proteaseenzym, wobei das Proteaseenzym eine thermophile Serinprotease ist, die eine optimale Aktivität bei einer Temperatur höher als 70,0 °C aufweist,
- mindestens ein Lipaseenzym, wobei das Lipaseenzym eine Phospholipase ist,
- optional Stärke und/oder Öl,
- optional Eier und/oder Milchpulver, und
- optional ein oder mehrere Reduktionsmittel.

11. Gebackener Teigstrang nach Anspruch 10, wobei das Proteaseenzym eine thermophile Serinprotease ist, die eine optimale Aktivität bei einer Temperatur höher als 75,0 °C, vorzugsweise bei einer Temperatur höher als 80,0 °C aufweist; und/oder

   wobei das Lipaseenzym ein Phospholipase-A-Enzym, vorzugsweise ein Phospholipase-A1-Enzym ist; und/oder
   wobei mindestens 70,0 % der Monoglyceride eine Partikelgröße kleiner als 150 $\mu$m aufweisen.

12. Gebackener Teigstrang nach Anspruch 10 oder 11, wobei

   - die ein oder mehreren Monoglyceride in einer Menge zwischen 100 und 2000 g/100 kg Mehl vorhanden sind;
   - das mindestens eine Proteaseenzym in einer Menge zwischen 30 und 1000 Proteaseeinheiten/100 kg Mehl vorhanden ist, wobei die Proteaseaktivität an azurinvernetztem Casein als Substrat unter Verwendung des in Beispiel 1 beschriebenen Verfahrens gemessen wird; und/oder
   - das mindestens eine Lipaseenzym in einer Menge zwischen 2300 und 60000 Phospholipaseeinheiten/100 kg Mehl vorhanden ist, wobei die Phospholipaseaktivität unter Verwendung von 1,2-Dioleoyl-sn-glycero-3-phospho-rac-1-glycerol als Substrat unter Verwendung des in Beispiel 1 beschriebenen Verfahrens gemessen wird.

13. Verbessererzusammensetzung in Pulverform, umfassend:

   - ein oder mehrere Monoglyceride, wobei die Monoglyceride gesättigte Monoglyceride in Pulverform sind, die eine Iodzahl kleiner oder gleich 5 aufweisen, und wobei mindestens 70 % der Monoglyceride in Pulverform eine Partikelgröße zwischen 50 und 200 $\mu$m aufweisen;
   - mindestens ein Proteaseenzym, wobei das Proteaseenzym eine thermophile Serinprotease ist, die eine optimale Aktivität bei einer Temperatur höher als 70,0 °C aufweist;
   - mindestens ein Lipaseenzym, wobei das Lipaseenzym eine Phospholipase ist;
   wobei das Proteaseenzym in der Verbessererzusammensetzung in einer Menge zwischen 0,01 und 10 Proteaseeinheiten pro g der ein oder mehreren Monoglyceride vorhanden ist; und
   wobei das Lipaseenzym in der Verbessererzusammensetzung in einer Menge zwischen 1 und 600 Phospholipaseeinheiten pro g der ein oder mehreren Monoglyceride vorhanden ist,
   wobei die Proteaseaktivität an azurinvernetztem Casein als Substrat unter Verwendung des in Beispiel 1 beschriebenen Verfahrens gemessen wird und wobei die Phospholipaseaktivität unter Verwendung von 1,2-Dioleoyl-sn-glycero-3-phospho-rac-1-glycerol als Substrat unter Verwendung des in Beispiel 1 beschriebenen Verfahrens gemessen wird.

14. Verbessererzusammensetzung nach Anspruch 13, wobei das Proteaseenzym eine thermophile Serinprotease ist, die eine optimale Aktivität bei einer Temperatur höher als 75,0 °C, vorzugsweise bei einer Temperatur höher als 80,0 °C aufweist; und/oder
   wobei das Lipaseenzym ein Phospholipase-A-Enzym, vorzugsweise ein Phospholipase-A1-Enzym ist.

15. Verwendung des gebackenen Teigstrangs nach einem der Ansprüche 10 bis 12 oder Verwendung der Verbessererzusammensetzung nach Anspruch 13 oder 14 für die Herstellung von Produkten auf Basis gebackener Teigstränge, insbesondere für die Herstellung von Produkten auf Basis gebackener Teigstränge mit verringerter Aufnahme von Öl oder Fett und Zucker während der Herstellung des Produkts, verglichen mit einem Produkt auf Basis gebackener Teigstränge, das ohne die ein oder mehreren Monoglyceride, das mindestens eine Proteaseenzym und das mindestens eine Lipaseenzym hergestellt wurde.

**Revendications**

1. Procédé d'obtention de bandes de pâte à frire cuites, dans lequel le procédé comprend les étapes suivantes :

(a) la préparation d'une pâte à frire comprenant

- de la farine, de l'eau,
- un ou plusieurs monoglycérides, dans lequel les un ou plusieurs monoglycérides ont un indice d'iode inférieur ou égal à 5,0, dans lequel les un ou plusieurs monoglycérides sont sous forme de poudre, et dans lequel au moins 70,0 % desdits monoglycérides ont une taille de particules inférieure à 200 μm ;
- au moins une enzyme protéase, dans lequel ladite enzyme protéase est une sérine protéase thermophile ayant une activité optimale à une température supérieure à 70,0 °C ;
- au moins une enzyme lipase, dans lequel ladite enzyme lipase est une phospholipase ;
- éventuellement de l'amidon et/ou de l'huile,
- éventuellement du sucre et/ou du sirop de sucre,
- éventuellement des œufs et/ou du lait en poudre, et,
- éventuellement un ou plusieurs agents réducteurs ;

(b) éventuellement le repos de la pâte à frire,
(c) l'extrusion ou la transformation de la pâte à frire en bandes de pâte à frire individuelles, en particulier dans lequel les bandes de pâte à frire individuelles ont un diamètre compris entre 0,4 mm et 3,0 mm, de préférence entre 0,5 et 2,0 mm, et
(d) la cuisson des bandes de pâte à frire, obtenant ainsi les bandes de pâte à frire cuites, en particulier dans lequel les bandes de pâte à frire cuites ont un diamètre moyen compris entre 0,4 mm et 3,0 mm, de préférence entre 0,5 et 2,0 mm.

2. Procédé selon la revendication 1, dans lequel les un ou plusieurs monoglycérides sont présents dans la pâte à frire en une quantité comprise entre 100 et 2 000 g/100 kg de farine ; et/ou dans lequel l'au moins une enzyme protéase est présente dans la pâte à frire en une quantité comprise entre 30 et 1 000 unités de protéase/100 kg de farine ; et/ou dans lequel l'au moins une enzyme lipase est présente dans la pâte à frire en une quantité comprise entre 2 300 et 60 000 unités de phospholipase/100 kg de farine ; dans lequel l'activité protéase est mesurée sur de la caséine réticulée à l'azurine comme substrat à l'aide du procédé décrit dans l'exemple 1 et dans lequel l'activité phospholipase est mesurée à l'aide du 1,2-dioléoyl-sn-glycéro-3-phospho-rac-1-glycérol comme substrat à l'aide du procédé décrit dans l'exemple 1.

3. Procédé selon la revendication 1 ou la revendication 2, dans lequel au moins 70,0 % desdits monoglycérides ont une taille de particules inférieure à 150 μm ; et/ou

dans lequel l'au moins une enzyme protéase est une sérine protéase thermophile ayant une activité optimale à une température supérieure à 75,0 °C, de préférence à une température supérieure à 80,0 °C ; et/ou
dans lequel l'au moins une enzyme lipase est une phospholipase A, de préférence une phospholipase A1.

4. Procédé selon l'une quelconque des revendications 1 à 3, dans lequel la bande de pâte à frire ou la bande de pâte à frire cuite a une longueur d'au moins 30 cm ou 50 cm.

5. Procédé selon l'une quelconque des revendications 1 à 4, dans lequel le procédé comprend les étapes suivantes

(a) la préparation d'une pâte à frire, dans lequel la pâte à frire comprend, exprimée en poids de farine :

- 100 % en poids de farine, de préférence une farine ayant un rapport P/L compris entre 0,5 et 3, de manière davantage préférée encore une farine ayant un rapport P/L compris entre 0,5 et 2, dans lequel le rapport P/L est déterminé par un test alvéographique selon la méthode internationale AACC 54-30.1999 ou la norme ICC n° 121.1992 ;
- 100 à 250 % en poids d'eau ;
- un ou plusieurs monoglycérides, dans lequel lesdits monoglycérides sont des monoglycérides saturés sous forme de poudre, ayant un indice d'iode inférieur ou égal à 5,0, et dans lequel au moins 70,0 % des monoglycérides sous forme de poudre ont une taille de particules comprise entre 50 et 200 μm, en une quantité comprise entre 100 et 2 000 g/100 kg de farine ;
- au moins une enzyme protéase, dans lequel ladite enzyme protéase est une sérine protéase thermophile ayant une activité optimale à une température supérieure à 70,0 °C, en une quantité comprise entre 30 et 1 000 unités de protéase/100 kg de farine, dans lequel l'activité protéase étant mesurée sur de la caséine réticulée à l'azurine comme substrat à l'aide du procédé décrit dans l'exemple 1 ;

- au moins une enzyme lipase, dans lequel ladite enzyme lipase est une phospholipase, en une quantité comprise entre 2 300 et 60 000 unités de phospholipase/100 kg de farine, dans lequel l'activité phospholipase est mesurée à l'aide du 1,2-dioléoyl-sn-glycéro-3-phospho-rac-1-glycérol comme substrat à l'aide du procédé décrit dans l'exemple 1 ; et ;

- éventuellement 0 à 15 % en poids d'huile, en particulier 5 à 15 % en poids d'huile ;

- éventuellement 5 à 60 % en poids d'amidon natif, en particulier 25 à 50 % en poids d'amidon natif ;

- éventuellement 0 à 10 % en poids d'œufs et/ou de lait en poudre, en particulier 4 à 10 % en poids d'œufs et/ou de lait en poudre ;

- éventuellement 0 à 15 % en poids de sucre et/ou de sirop de sucre, en particulier 5 à 15 % en poids de sucre et/ou de sirop de sucre ; et

- éventuellement un agent réducteur, dans lequel, lorsque ledit agent réducteur est le métabisulfite de sodium, il est présent en une quantité comprise entre 5,0 et 20,0 g/100 kg de farine, ou lorsque ledit agent réducteur est de la levure désactivée, il est présent en quantité comprise entre 500 et 3 000 g/100 kg de farine ;

(b) éventuellement le repos de la pâte à frire entre 0 min et 16 heures, et

(c) l'extrusion ou la transformation de la pâte à frire en bandes de pâte à frire individuelles avec un diamètre compris entre 0,4 et 3,0 mm, de préférence entre 0,5 et 2,0 mm, et

(d) la cuisson des bandes de pâte à frire, de préférence pendant une période comprise entre 10 et 60 s à une température comprise entre 180 et 220 °C, obtenant ainsi des bandes de pâte à frire cuites d'un diamètre compris entre 0,4 et 3,0 mm, de préférence entre 0,5 et 2,0 mm.

6. Procédé d'obtention d'un produit à base de bandes de pâte à frire cuites, comprenant les étapes suivantes :

(i) la préparation de bandes de pâte à frire cuites selon un procédé tel que défini dans l'une quelconque des revendications 1 à 5 ;

(ii) l'enroulement d'une pluralité de bandes de pâte à frire cuites autour d'une garniture, obtenant ainsi un produit enroulé et fourré ;

(iii) le trempage du produit enroulé et fourré dans de la graisse ou de l'huile ;

(iv) la friture du produit enroulé et fourré dans la graisse ou l'huile, de préférence entre 20 et 60 minutes à une température comprise entre 150 °C et 200 °C ;

(v) le refroidissement des produits frits ;

(vi) le trempage des produits frits dans un sirop de sucre, obtenant ainsi un produit à base de bandes de pâte à frire cuites ; et

(vii) éventuellement, la découpe et l'emballage des produits à base de bandes de pâte à frire cuites .

7. Procédé selon la revendication 6, dans lequel la garniture est une garniture à base de noix, en particulier comprenant des pistaches, de l'arachide, des noix de cajou, des noix, des amandes, et analogues.

8. Procédé selon la revendication 6 ou 7, dans lequel le produit à base de bandes de pâte à frire cuites est un produit de type borma.

9. Procédé selon l'une quelconque des revendications 6 à 8, dans lequel le produit à base de bandes de pâte à frire cuites, de préférence le produit de type borma, a absorbé au moins 5 % d'huile ou de graisse en moins et au moins 5 % de sucre en moins lors de la préparation du produit, en particulier lors de l'étape de friture dans de la graisse ou de l'huile et lors du trempage dans du sirop de sucre, respectivement, par rapport à un produit à base de bandes de pâte à frire cuites préparé sans les un ou plusieurs monoglycérides, l'au moins une enzyme protéase et l'au moins une enzyme lipase.

10. Bande de pâte à frire cuite, en particulier ayant un diamètre compris entre 0,4 et 3,0 mm, de manière davantage préférée entre 0,5 et 2,0 mm, obtenue par un procédé selon l'une quelconque des revendications 1 à 5, comprenant

- de la farine, de l'eau,

- un ou plusieurs monoglycérides, dans laquelle les un ou plusieurs monoglycérides ont un indice d'iode inférieur ou égal à 5,0, dans laquelle les un ou plusieurs monoglycérides sont sous forme de poudre, et dans laquelle au moins 70,0 % desdits monoglycérides ont une taille de particules inférieure à 200 $\mu$m,

- au moins une enzyme protéase, dans laquelle ladite enzyme protéase est une sérine protéase thermophile ayant une activité optimale à une température supérieure à 70,0 °C,

- au moins une enzyme lipase, dans laquelle ladite enzyme lipase est une phospholipase,
- éventuellement de l'amidon et/ou de l'huile,
- éventuellement des œufs et/ou du lait en poudre, et
- éventuellement un ou plusieurs agents réducteurs.

11. Bande de pâte à frire cuite selon la revendication 10, dans laquelle l'au moins une enzyme protéase est une sérine protéase thermophile ayant une activité optimale à une température supérieure à 75,0 °C, de préférence à une température supérieure à 80,0 °C ; et/ou
dans laquelle l'enzyme lipase est une enzyme phospholipase A, de préférence une enzyme phospholipase A1 ; et/ou
dans laquelle au moins 70,0 % desdits monoglycérides ont une taille de particules inférieure à 150 μm.

12. Bande de pâte à frire cuite selon la revendication 10 ou 11, dans laquelle

- les un ou plusieurs monoglycérides sont présents en une quantité comprise entre 100 et 2 000 g/100 kg de farine ;
- l'au moins une enzyme protéase est présente en une quantité comprise entre 30 et 1 000 unités de protéase/100 kg de farine, dans laquelle l'activité protéase est mesurée sur de la caséine réticulée à l'azurine comme substrat à l'aide du procédé décrit dans l'exemple 1 ; et/ou
- l'au moins une enzyme lipase est présente en une quantité comprise entre 2 300 et 60 000 unités de phospholipase/100 kg de farine, dans laquelle l'activité phospholipase est mesurée à l'aide du 1,2-dioléoyl-sn-glycéro-3-phospho-rac-1-glycérol comme substrat à l'aide du procédé décrit dans l'exemple 1.

13. Composition améliorante sous forme de poudre, comprenant :

- un ou plusieurs monoglycérides, dans laquelle lesdits monoglycérides sont des monoglycérides saturés sous forme de poudre, ayant un indice d'iode inférieur ou égal à 5, et dans laquelle au moins 70 % des monoglycérides sous forme de poudre ont une taille de particules comprise entre 50 et 200 μm ;
- au moins une enzyme protéase, dans laquelle ladite enzyme protéase est une sérine protéase thermophile ayant une activité optimale à une température supérieure à 70,0 °C ;
- au moins une enzyme lipase, dans laquelle ladite enzyme lipase est une phospholipase ;
dans laquelle l'enzyme protéase est présente dans la composition améliorante en une quantité comprise entre 0,01 et 10 unités de protéase par gramme desdits un ou plusieurs monoglycérides ; et
dans laquelle l'enzyme lipase est présente dans la composition améliorante en une quantité comprise entre 1 et 600 unités de phospholipase par gramme desdits un ou plusieurs monoglycérides,
dans laquelle l'activité protéase est mesurée sur de la caséine réticulée à l'azurine comme substrat à l'aide du procédé décrit dans l'exemple 1 et dans laquelle l'activité phospholipase est mesurée à l'aide du 1,2-dioléoyl-sn-glycéro-3-phospho-rac-1-glycérol comme substrat à l'aide du procédé décrit dans l'exemple 1.

14. Composition améliorante selon la revendication 13, dans laquelle l'au moins une enzyme protéase est une enzyme sérine protéase thermophile ayant une activité optimale à une température supérieure à 75,0 °C, de préférence à une température supérieure à 80,0 °C ; et/ou
dans laquelle l'enzyme lipase est une enzyme phospholipase A, de préférence une enzyme phospholipase A1.

15. Utilisation de la bande de pâte à frire cuite selon l'une quelconque des revendications 10 à 12, ou utilisation de la composition améliorante selon la revendication 13 ou 14, pour la préparation de produits à base de bandes de pâte à frire cuites, en particulier pour la préparation de produits à base de bandes de pâte à frire cuites avec une absorption réduite d'huile ou de graisse et de sucre lors de la préparation du produit, par rapport à un produit à base de bandes de pâte à frire cuites préparé sans les un ou plusieurs monoglycérides, l'au moins une enzyme protéase et l'au moins une enzyme lipase.

**EP 4 648 616 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018011118 A1
- WO 2009138447 A1
- WO 2018150021 A1